# EUROPÄISCHE PATENTSCHRIFT

(11) **EP 3 713 812 B1**
(45) Veröffentlichungstag und Bekanntmachung des Hinweises auf die Patenterteilung: **13.10.2021**
(21) Anmeldenummer: 18810952.4
(22) Anmeldetag: 21.11.2018
(51) Int. Cl.: B62D 1/185, F16C 3/035, F16C 33/58, F16C 33/36

(54) **LENKSÄULE FÜR EIN KRAFTFAHRZEUG**
STEERING COLUMN FOR A MOTOR VEHICLE
COLONNE DE DIRECTION POUR VÉHICULE AUTOMOBILE

(30) Priorität: 23.11.2017 DE 102017221004
(43) Veröffentlichungstag der Anmeldung: 30.09.2020
(73) Patentinhaber: thyssenkrupp Presta AG, 9492 Eschen (LI); thyssenkrupp AG, 45143 Essen (DE)
(72) Erfinder: BAYER, Tim, 9450 Lüchingen (CH); HUBER, Sebastian, 6811 Göfis (AT); KREUTZ, Daniel, 6800 Feldkirch (AT); SCHACHT, Arne, 6800 Feldkirch (AT)
(74) Vertreter: thyssenkrupp Intellectual Property GmbH
(86) Internationale Anmeldenummer: PCT/EP2018/082039
(87) Internationale Veröffentlichungsnummer: WO 2019/101781

(56) Entgegenhaltungen:
- DE-A1-102015 216 326

## Beschreibung

### Stand der Technik

Die Erfindung betrifft eine Lenksäule für ein Kraftfahrzeug, umfassend eine Stelleinheit, in der eine Lenkspindel um eine Längsachse drehbar gelagert ist und die eine Manteleinheit aufweist, die mindestens drei, axial relativ zueinander teleskopierbar angeordnete Mantelrohre aufweist, von denen eines ein Außenmantelrohr bildet, in dem mindestens ein Zwischenmantelrohr aufgenommen ist, in dem ein Innenmantelrohr aufgenommen ist, und wobei zwischen den Mantelrohren Wälzkörper in Achsrichtung abrollbar angeordnet sind.

Eine Lenksäule für ein Kraftfahrzeug weist eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist in der Manteleinheit einer Stelleinheit drehbar gelagert, die an der Fahrzeugkarosserie über eine Trageinheit gelagert ist, welche die Manteleinheit hält. Verstellbare Lenksäulen ermöglichen die Verstellung der Stelleinheit relativ zur Fahrzeugkarosserie.

Es ist bekannt, die Lenksäule in Längsrichtung, d.h. in Achsrichtung der Lenkspindel, verstellbar zu gestalten, um im manuellen Fahrbetrieb das Lenkrad in Bedienposition für einen bequemen Lenkeingriff an die Fahrerposition anzupassen, und im autonomen Fahrbetrieb, wenn kein manueller Lenkeingriff erfolgt, die Lenksäule längs zusammen zu schieben und dadurch das Lenkrad in eine Verstauposition außerhalb der Bedienposition zu bringen, so dass der Fahrzeuginnenraum für eine anderweitige Nutzung freigegeben wird.

Die Verstellbarkeit in Längsrichtung wird durch eine teleskopartige Anordnung von Mantelrohren realisiert. Um einen ausreichenden Verstellweg bei einer möglichst kompakten, kurzen Abmessung in Verstauposition zu erreichen, ist es aus der DE 10 2015 216326 A1 bekannt, mindestens drei Mantelrohre ineinander teleskopartig verschiebbar anzuordnen, nämlich ein äußeres Mantelrohr oder Außenmantelrohr, ein inneres Mantelrohr oder Innenmantelrohr, sowie mindestens ein koaxial dazwischen eingesetztes Zwischenmantelrohr. Zur Einstellung der Verstauposition können die drei Mantelrohre so weit zusammengeschoben, d.h. eingefahren werden, dass das Innen- und das oder die Zwischenmantelrohre in Achsrichtung im Wesentlichen im Außenmantelrohr versenkt sind. Vorzugsweise erfolgt das Ein-und Ausfahren mittels eines motorischen Verstellantriebs, der beispielsweise einen von einem Elektromotor antreibbaren Spindeltrieb umfasst, der an den Mantelrohren angreift.

Um die Lenksäule schnell und sicher in die Verstauposition einzufahren, und beim Wechsel vom automatischen in den manuellen Fahrbetrieb das Lenkrad aus der Verstauposition in die Bedienposition auszufahren, ist es wesentlich, dass die Mantelrohre leichtgängig relativ zueinander bewegt werden können, d.h. hinreichend reibungsarm gleiten, so dass sie zum Ein-und Ausfahren von dem Verstellantrieb mit geringer Antriebskraft schnell und zuverlässig bewegt werden können. Dabei müssen die Mantelrohre möglichst spielarm ineinander geführt sein, damit eine ausreichende Steifigkeit der Lenksäule gewährleistet ist. Um dies zu erreichen, wird in der genannten DE 10 2015 216326 A1 bereits vorgeschlagen, zwischen den Mantelrohren eine wälzgelagerte Linearführung vorzusehen. Eine reibungsarme teleskopierende Bewegung wird bei einer derartigen linearen Wälzlagerung durch Wälzkörper erreicht, die zwischen den Mantelrohren in Längsrichtung abrollbar angebracht sind. Dadurch wird eine leichtgängige und spielarme Verstellbarkeit erreicht, die insbesondere geringere Stick-Slip-Effekte als eine mechanisch vergleichbare Gleitlagerung hat. Somit offenbart die genannte DE 10 2015 216326 A1 die Oberbegriffe der unabhängigen Ansprüche 1 und 11.

Für die Führung der mindestens drei ineinander geführten Mantelrohre sind bei der gattungsgemäßen Lenksäule mindestens zwei lineare Wälzlagerungen erforderlich, zwischen dem Außen- und dem Zwischenmantelrohr sowie zwischen den Zwischen- und dem Innenmantelrohr. Durch die zwischen den Mantelrohren angeordneten Wälzkörper benötigen die Wälzlagerungen mehr radialen Bauraum, als beispielsweise einfache Gleitführungen. Eine Vergrößerung der Abmessungen der Lenksäule ist angesichts des knappen zur Verfügung stehenden Bauraums im Kraftfahrzeug jedoch nicht akzeptabel.

Angesichts der vorangehend erläuterten Problematik ist es eine Aufgabe der vorliegenden Erfindung, eine Lenksäule mit einer kompakten wälzgelagerten Manteleinheit zur Verfügung zu stellen.

### Darstellung der Erfindung

Diese Aufgabe wird erfindungsgemäß gelöst durch eine Lenksäule mit den Merkmalen des Anspruchs 1 und denen des Anspruchs 11. Vorteilhafte Weiterbildungen ergeben sich aus den Unteransprüchen.

Erfindungsgemäß wird für eine gattungsgemäße Lenksäule der eingangs genannten Art vorgeschlagen, dass zwischen dem Außenmantelrohr und dem Zwischenmantelrohr erste Wälzkörper, und zwischen dem Zwischenmantelrohr und dem Innenmantelrohr zweite Wälzkörper angeordnet sind, wobei die ersten Wälzkörper relativ zu den zweiten Wälzkörpern in Umfangsrichtung versetzt angeordnet sind.

Bei der erfindungsgemäßen Anordnung sind die Wälzkörper der wälzgelagerten Linearführungen, die sich in den koaxial angeordneten ersten und zweiten Zwischenräumen zwischen unterschiedlichen Paaren von Mantelrohren befinden, beispielsweise zwischen Innen- und Zwischenmantelrohr, oder Zwischen- und Außenmantelrohr, oder auch zwischen zwei Zwischenmantelrohren, an ersten und zweiten Umfangspositionen positioniert, die über den Umfang verteilt zueinander auf Lücke stehen. Anders ausgedrückt sind die Wälzkörper in unterschiedlichen, radial inneren und äußeren Zwischenräumen jeweils in abwechselnden, zueinander winkelversetzten Radialrichtungen positioniert, welche mit den jeweiligen Umfangspositionen korrespondieren, d.h. die Radialrichtungen schneiden die Mantelrohre an den betreffenden Umfangspositionen.

Dadurch wird verhindert, dass erste und zweite Wälzkörper in bezüglich eines Mantelrohrs derselben Radialrichtung benachbart positioniert sind, und somit erfindungsgemäß nicht auf derselben Umfangsposition in radialer Richtung von innen nach außen gesehen übereinander angeordnet sind. Durch die im Umfangsrichtung abwechselnde Positionierung resultiert der Vorteil, dass die ersten und zweiten Wälzkörper zwischen den Mantelrohren weniger Bauraum in radialer Richtung beanspruchen, und eine kompakte Bauform der Lenksäule realisiert werden kann, die ihrerseits wenig Bauraum im Fahrzeug beansprucht. Ein weiterer Vorteil ist, dass durch die versetzte Anordnung der Wälzkörper eine räumlich bestimmte, optimierte Lagerung der Mantelrohre gebildet wird, welche eine hohe Steifigkeit der Manteleinheit bewirkt und unerwünschte Schwingungen vermeidet. Außerdem wird durch die versetzte Anordnung eine gegenseitige Funktionsbeeinträchtigung der wälzgelagerten Linearführungen auch unter extremen Betriebsbedingungen, beispielsweise durch einen Fahrzeugaufprall verursachte Belastungsspitzen, weitgehend verhindert, wodurch die Funktionssicherheit und damit die Fahrzeugsicherheit erhöht wird.

Bevorzugt sind die ersten Wälzkörper in einer oder mehreren achsparallelen ersten Reihen und die zweiten Wälzkörper in einer oder mehreren achsparallelen zweiten Reihen angeordnet sind. Jeweils zwei oder mehr Wälzkörper einer Reihe sind zur Ausbildung einer Linearführung zwischen den Mantelrohren in Längsrichtung abrollbar angeordnet, wie dies aus wälzgelagerten Linearlagerungen im Prinzip bekannt ist. Erfindungsgemäß sind die ersten und zweiten Reihen, welche den ersten und zweiten Linearführungen entsprechen, in Umfangsrichtung zueinander versetzt.

Die Wälzkörper können in unterschiedlichen Reihen, beispielsweise in einer ersten und zweiten Reihe, oder auch in zwei verschiedenen ersten oder zweiten Reihen, relativ zueinander in Achsrichtung, d.h. in Richtung der Längsachse, versetzt sein, und alternativ oder zusätzlich innerhalb einer Reihe unterschiedliche Abstände zueinander aufweisen. Dadurch können das Schwingungsverhalten und die Steifigkeit der Mantelrohranordnung angepasst und verbessert werden, beispielsweise zur Unterdrückung unerwünschter Resonanzen oder zur Erhöhung der Eigenfrequenz.

Es kann vorzugsweise vorgesehen sein, dass die ersten Wälzkörper in einem ersten Wälzkörperkäfig und die zweiten Wälzkörper in einem zweiten Wälzkörperkäfig jeweils um ihre Abrollachsen drehbar aufgenommen sind. Die ersten und zweiten Wälzkörperkäfige können gleichartig aufgebaut sein und lediglich unterschiedlich dimensioniert. Ein Wälzkörperkäfig hat eine rohrabschnitt- oder hülsenförmige Grundform, und wird koaxial in den Zwischenraum zwischen zwei Mantelrohre eingesetzt. In dem Wälzkörperkäfig werden die Wälzkörper vorzugsweise in einem losen Formschluss relativ zueinander in Position gehalten, wobei bevorzugt jeweils ein Wälzkörper um seine Abrollachse in einer Wälzkörperaufnahme gehalten ist, so dass er auf den angrenzenden Mantelrohren abrollen kann. Beispielsweise können die ersten und zweiten Wälzkörperaufnahmen im ersten und zweiten Wälzkörperkäfig in achsparallelen Reihen angeordnet sein, wodurch die Abstände der Wälzkörper in Achsrichtung festgelegt werden. Durch eine entsprechende Rotationsorientierung der Wälzkörperkäfige um die Längsachse kann die Winkelposition und dementsprechend der erfindungsgemäße Versatz der Wälzkörper in Umfangsrichtung vorgegeben werden, beispielsweise eine versetzte Anordnung der Reihen erster und zweiter Wälzkörper. Innerhalb eines Wälzkörperkäfigs können die Wälzkörperpositionen in unterschiedlichen Reihen bei Bedarf in Achsrichtung zueinander versetzt sein.

Ein Wälzkörperkäfig kann einteilig oder auch mehrteilig aus Blech oder aus Kunststoff ausgebildet sein, wobei eine einstückige Ausbildung als Kunststoff-Spritzgussteil zur Aufnahme sämtlicher Wälzkörper rationell gefertigt werden kann, und dabei leicht und funktionssicher ist.

Eine vorteilhafte Weiterbildung ist, dass ein Wälzkörperkäfig zumindest abschnittweise in Achsrichtung geschlitzt ausgebildet ist. Durch einen Längsschlitz, der sich zumindest über einen Teil der Länge in Achsrichtung erstreckt, oder in Achsrichtung über die gesamte Länge durchgeht, erhält der Wälzkörperkäfig ein umfangsseitig offenes, C-förmiges Querschnittsprofil. Erfolgt die Fertigung aus einem elastischen Material, beispielsweise aus einem geeigneten Kunststoff wie Polypropylen (PP), Acrylnitril-Butadien-Styrol (ABS), Polyamid (PA) oder dergleichen, kann der Wälzkörperkäfig im Bereich des Längsschlitzes elastisch verformt und radial federnd vorgespannt auf oder in einem Mantelrohr positioniert werden. Dadurch kann die Montage vereinfacht werden.

Die Mantelrohre können in Achsrichtung erstreckte Laufbahnen für die Wälzkörper aufweisen. Die Laufbahnen, gleichbedeutend Wälzkörperlaufbahnen genannt, sind auf dem Umfang der Mantelrohre ausgebildet und liegen einander jeweils zur Bildung einer Linearführung paarweise radial gegenüber. Eine Linearführung umfasst zumindest eine äußere Laufbahn, die auf dem Außenumfang eines innenliegenden Mantelrohrs ausgebildet ist, und eine innere Laufbahn, die auf dem Innenumfang eines außenliegenden Mantelrohrs der vorgenannten äußeren Laufbahn radial gegenüberliegend ausgebildet ist, wobei eine oder mehrere Wälzkörper spielarm, im Wesentlichen spielfrei, zwischen den Laufbahnen in Achsrichtung abrollbar eingesetzt sind. Bevorzugt sind mehrere Laufbahnen über den Umfang verteilt, bevorzugt gleichmäßig verteilt ausgebildet. Dadurch werden erste und zweite Linearführungen gebildet, die entsprechend der erfindungsgemäßen Anordnung der Wälzkörper in Umfangsrichtung zueinander versetzt sind.

Eine vorteilhafte Ausführung der Erfindung ist, dass zumindest eine der Laufbahnen und/oder die Wälzkörper bombiert ausgebildet sind. Eine bombierte Laufbahn hat einen gegenüber einer zylindrischen Grundform in radialer Richtung konvex ausgewölbten Querschnitt; ein bombierter Wälzkörper wird durch eine tonnenförmige Rolle gebildet, die gegenüber einer zylindrischen Grundform konvex ausgewölbt ist, wobei der Durchmesser im mittleren Bereich größer ist als in den Endbereichen. Es können die Wälzkörper bombiert sein, und/oder zumindest eine der Laufbahnen. Während ein zylindrischer Wälzkörper, beispielsweise eine zylindrische Nadelrolle, in einer erfindungsgemäßen Anordnung auf einer zylindrischen Laufbahn eine quer zur Achsrichtung liegende, über den Wälzkörper durchgehende linienförmige Auflage hat, wird bei einer Bombierung zwischen einem Wälzkörper und zumindest einer der Laufbahnen eine kurze linienförmige, quasi punktförmige Auflage gebildet. Gegenüber einem Kugellager, welches als Wälzkörper Kugeln hat, die auf ebenen oder konvex nutförmigen Kugellaufbahnen abrollen, kann bei der bombierten Ausführung eines Rollen- oder Nadelrollenlagers durch die Bombierung ein beliebig großer Radius vorgegeben werden kann, und zwar anders als bei Kugeln unabhängig vom Wälzkörperdurchmesser, der durch den Zwischenraum zwischen den Mantelrohren eng begrenzt ist. Dadurch ist es besser möglich, das Wälzlager spielfrei einzustellen, ohne eine Kerbwirkung wie bei der Verwendung von Kugeln mit vergleichbar kleinem Durchmesser zu riskieren. Folglich kann eine verbesserte spielarme Einstellung der Längsführung der Mantelrohre bei kompakten Abmessungen realisiert werden.

Es kann vorgesehen sein, dass die Mantelrohre einen mehreckigen Querschnitt haben, bevorzugt mit einer geraden Seitenzahl, wobei die ersten und zweiten Wälzkörper bevorzugt auf jeweils paarweise gegenüberliegenden Seiten angeordnet sind. Die Mantelrohre können als Mehrkantrohre, beispielsweise als vier-, sechs- oder achtseitige Rohrprofile ausgebildet sein, wobei die Laufbahnen für die Wälzkörper innen oder außen auf einer oder mehreren der Seitenflächen ausgebildet sein können. Die erfindungsgemäß in Umfangsrichtung versetzte Anordnung wird dadurch realisiert, dass die ersten Wälzkörper auf ersten Seitenflächen abrollen, und die zweiten Wälzkörper auf dazu versetzten Seitenflächen des Querschnitts. Beispielsweise können bei einem achteckigen Querschnitt die zwischen dem Außenmantelrohr und dem Zwischenmantelrohr angeordneten ersten Wälzkörper in Umfangsrichtung gezählt auf den geradzahligen Seiten, also der zweiten, vierten, sechsten und achten Seite angeordnet sein, und die zwischen dem Zwischenmantelrohr und dem Innenmantelrohr angeordneten zweiten Wälzkörper in Umfangsrichtung gezählt auf den ungeradzahligen Seiten, also der ersten, dritten, fünften und siebten Seite. In der achteckigen Anordnung sind die Radialrichtungen, in denen die Wälzkörper positioniert sind, jeweils um 360°/8 = 45° gegeneinander winkelversetzt, entsprechend könnten bei einer viereckigen Anordnung 90° und bei einer sechseckigen Anordnung 60° Winkelversatz vorgegeben werden. Durch die paarweise Anordnung, die insbesondere bei geraden Seitenzahlen möglich ist, kann eine gleichmäßige Verteilung von Lagerlasten auf den Umfang erreicht werden.

Es ist ebenfalls denkbar und möglich, dass mindestens zwei ineinander axial teleskopierbare Zwischenmantelrohre vorgesehen sind, zwischen denen dritte Wälzkörper angeordnet sind, die relativ zu den ersten Wälzkörpern und/oder zweiten Wälzkörpern versetzt angeordnet sind. Zwischen dem Außen- und Innenmantelrohr der vorangehend beschriebenen dreifach teleskopierbaren Manteleinheit können zusätzlich weitere Zwischenmantelrohre angeordnet sein, so dass eine vier- oder mehrfach teleskopierbare Anordnung gebildet wird. Dabei wird durch den erfindungsgemäßen Versatz in Umfangsrichtung erreicht, dass die zwischen den Zwischenmantelrohren angeordneten Wälzkörper bezüglich der koaxial benachbarten Mantelrohre jeweils auf Lücke versetzt angeordnet sind, so dass keines der Zwischenmantelrohre innen und außen an derselben Umfangsposition wälzkörpergelagert ist. Dadurch können die beschriebenen Vorteile durchgehend realisiert werden.

Vorzugsweise kann ein motorischer Verstellantrieb mit dem Innenmantelrohr und dem Außenmantelrohr verbunden ist, von dem das Innenmantelrohr relativ zum Außenmantelrohr axial ein- und ausfahrbar ist. Der Verstellantrieb kann einen Spindeltrieb umfassen, mit einer auf einer Gewindespindel angeordneten Spindelmutter, und einem motorischen Antrieb, von dem die Gewindespindel und die Spindelmutter relativ zueinander drehend antreibbar sind. Derartige Verstellantriebe sind im Stand der Technik prinzipiell bekannt und gelten als zuverlässig und robust. Dabei ist die Spindelmutter an dem einen Mantelrohr, dem Innen- oder Außenmantelrohr, in Richtung der Längsachse (Achsrichtung) unverschieblich angebracht, und die Gewindespindel an dem dazu teleskopierbaren anderen Mantelrohr, dem Außenoder Innenmantelrohr. Von einem elektrischen Stellmotor wird über ein geeignetes Getriebe, beispielsweise ein Schnecken- oder Riemengetriebe, die Spindelmutter oder die Gewindespindel drehend angetrieben, wodurch die relativ dazu bezüglich der Drehung feststehende Gewindespindel oder Spindelmutter translatorisch in Richtung der Spindellängsachse bewegt wird, und je nach relativer Drehrichtung das Innenmantelrohr relativ zum Außenmantelrohr in Achsrichtung ein- oder ausfährt.

Die Stelleinheit kann in einer mit einer Fahrzeugkarosserie verbindbaren Trageinheit gehalten sein. Es kann vorgesehen sein, dass die Stelleinheit an der Trageinheit um eine quer zur Längsachse liegende Schwenkachse höhenverschwenkbar gelagert ist. Durch die Verschwenkung um eine derartige horizontale Schwenkachse kann eine Höhenverstellung realisiert werden, bei der das am hinteren Ende der Lenkspindel angebrachte Lenkrad in der Höhe relativ zur Fahrerposition eingestellt werden kann.

Die Höhenverstellung kann manuell erfolgen. Insbesondere zum automatisierten Verstauen der Lenksäule beim autonomen Fahren ist es vorteilhaft, dass ein elektrischer Höhen-Verstellantrieb mit der Trageinheit und der Stelleinheit verbunden ist, von dem die Stelleinheit relativ zur Trageinheit um die Schwenkachse bewegbar ist. Der Höhen-Verstellantrieb ist an sich ebenfalls bekannt und kann beispielsweise als elektromotorisch angetriebener Spindeltrieb realisiert werden, wie vorangehend für die Längsverstellung beschrieben.

Es ist möglich, dass die Lenkspindel mit einem Feedback-Aktuator gekoppelt ist. Ein Feedback-Aktuator dient bei einem mechanisch nicht gekoppelten steer-by-wire-Lenksystem dazu, dem Fahrer über das Lenkrad eine haptische Rückmeldung abhängig von der Fahrsituation zu geben, zur Vermittlung eines Lenkgefühls ähnlich wie bei konventionellen mechanisch gekoppelten Lenkungen. Ein Feedback-Aktuator weist hierzu eine Aktuatoreinheit auf, die einen als Handmoment- oder Lenkradsteller dienenden Verstellantrieb umfasst, und die abhängig von einem Rückkopplungs-Signal ein dem realen Reaktionsmoment entsprechendes Rückstellmoment (Feedbackmoment) über die Lenkwelle in das Lenkrad einkoppelt.

Derartige "Force-feedback"-Systeme geben dem Fahrer den Eindruck einer realen Fahrsituation wie bei einer konventionellen Lenkung, was eine intuitive Reaktion erleichtert.

Weiterhin wird eine Lenksäule für ein Kraftfahrzeug vorgeschlagen, umfassend eine Stelleinheit, in der eine Lenkspindel um eine Längsachse drehbar gelagert ist und die eine Manteleinheit aufweist, die mindestens zwei, axial relativ zueinander teleskopierbar angeordnete Mantelrohre aufweist, wobei zwischen den Mantelrohren Wälzkörper in Richtung der Längsachse abrollbar angeordnet sind, wobei die Mantelrohre sich in Richtung der Längsachse erstreckte Laufbahnen für die Wälzkörper aufweisen. Erfindungsgemäß ist zumindest eine der Laufbahnen und/oder die Wälzkörper bombiert ausgebildet.

Eine bombierte Laufbahn hat einen gegenüber einer zylindrischen Grundform in radialer Richtung konvex ausgewölbten Querschnitt; ein bombierter Wälzkörper wird durch eine tonnenförmige Rolle gebildet, die gegenüber einer zylindrischen Grundform konvex ausgewölbt ist, wobei der Durchmesser im mittleren Bereich größer ist als in den Endbereichen. Es können die Wälzkörper bombiert sein, und/oder zumindest eine der Laufbahnen. Während ein zylindrischer Wälzkörper, beispielsweise eine zylindrische Nadelrolle, in einer erfindungsgemäßen Anordnung auf einer ebenen Laufbahn eine quer zur Richtung der Längsachse liegende, über den Wälzkörper durchgehende linienförmige Auflage hat, wird bei einer Bombierung zwischen einem Wälzkörper und zumindest einer der Laufbahnen eine kurze linienförmige, quasi punktförmige Auflage gebildet. Gegenüber einem Kugellager, welches als Wälzkörper Kugeln hat, die auf ebenen oder konvex nutförmigen Kugellaufbahnen abrollen, kann bei der bombierten Ausführung eines Rollen- oder Nadelrollenlagers durch die Bombierung ein beliebig großer Radius vorgegeben werden kann, und zwar anders als bei Kugeln unabhängig vom Wälzkörperdurchmesser, der durch den Zwischenraum zwischen den Mantelrohren eng begrenzt ist. Dadurch ist es besser möglich, das Wälzlager spielfrei einzustellen, ohne eine Kerbwirkung wie bei der Verwendung von Kugeln mit vergleichbar kleinem Durchmesser zu riskieren. Folglich kann eine verbesserte spielarme Einstellung der Längsführung der Mantelrohre bei kompakten Abmessungen realisiert werden.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: die Lenksäule gemäß Figur 1 in einer schematischen teilweisen Innenansicht,
- Figur 3: eine vergrößerte Detailansicht von Figur 2,
- Figur 4: einen Längsschnitt (entlang der Längsachse) durch die Lenksäule gemäß Fi-gur 1,
- Figur 5: eine vergrößerte Detailansicht von Figur 3,
- Figur 6: ein Querschnitt durch die Lenksäule gemäß Figuren 1 bis 5,
- Figur 7: Wälzkörperkäfige der Lenksäule gemäß Figur 1 in einer schematischen per-spektivischen Ansicht,
- Figur 8: eine vergrößerte Detailansicht von Figur 6 in einer ersten Ausführungsform,
- Figur 9: eine vergrößerte Detailansicht von Figur 6 in einer zweiten Ausführungsform,
- Figur 10: eine vergrößerte Detailansicht von Figur 6 in einer dritten Ausführungsform,
- Figur 11: eine vergrößerte Detailansicht von Figur 6 in einer vierten Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

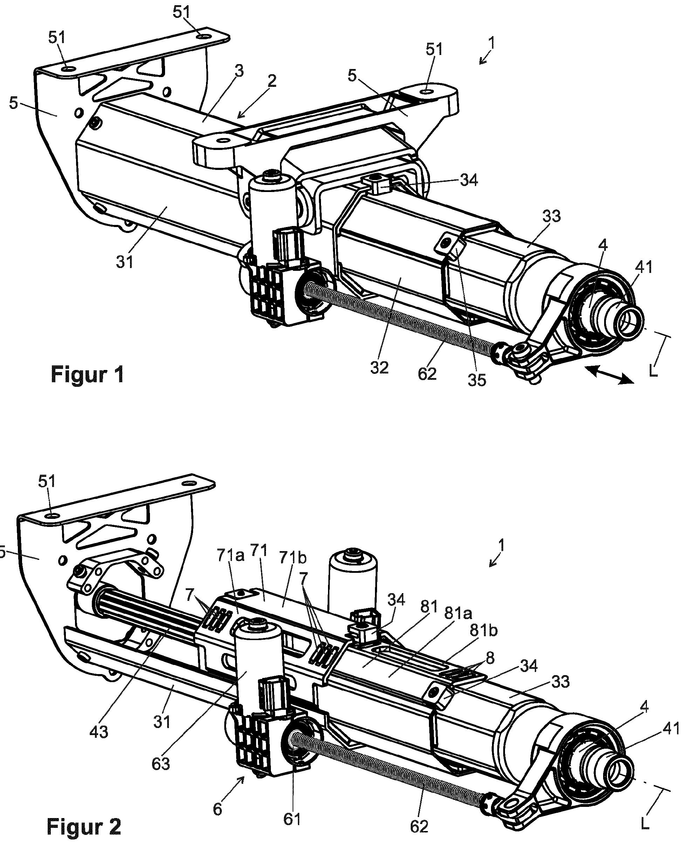

Figur 1 zeigt eine erfindungsgemäße Lenksäule 1 in einer Ansicht bezüglich der Fahrtrichtung von schräg hinten, die eine Stelleinheit 2 aufweist. Die Stelleinheit 2 umfasst eine Manteleinheit 3, die ein Außenmantelrohr 31, ein Zwischenmantelrohr 32 und ein Innenmantelrohr 33 aufweist. Die Mantelrohre 31, 32 und 33 sind in Richtung einer Längsachse L teleskopierend verschiebbar, koaxial ineinander angeordnet, wie mit einem Doppelpfeil angedeutet.

In der Manteleinheit 3 ist um die Längsachse L drehbar eine Lenkspindel 4 gelagert, die an ihrem hinteren Ende einen Anschlussabschnitt 41 zur Anbringung eines nicht dargestellten Lenkrads aufweist.

Die Stelleinheit 3 ist in einer Trageinheit 5 gehalten, welche Befestigungsmittel 51 zur Anbringung an einer nicht dargestellten Fahrzeugkarosserie aufweist.

Ein Verstellantrieb 6 weist einen Spindeltrieb mit einer Spindelmutter 61 und einer darin eingeschraubten Gewindespindel 62 auf, die von einem elektrischen Motor 63 relativ zueinander drehend antreibbar sind. Die Gewindespindel 62 erstreckt sich parallel zur Längsachse L und ist mit dem Innenmantelrohr 33 verbunden, und die Spindelmutter 61 stützt sich in Längsrichtung, die der Achsrichtung der Längsachse L entspricht, an dem Außenmantelrohr 31 ab. Durch eine relative Drehung mittels des Motors 63 werden die Gewindespindel 62 und die Spindelmutter 61 je nach Drehrichtung zusammen oder auseinander bewegt, wodurch das Innenmantelrohr 33 in Achsrichtung in das Außenmantelrohr 31 eingefahren oder ausgefahren wird, wie mit dem Doppelpfeil angedeutet. Dadurch wird eine Längsverstellung realisiert, durch die ein an dem Anschlussabschnitt 41 angebrachtes Lenkrad nach vorn in eine Verstauposition gebracht werden kann, in der das Innenmantelrohr 33 und das Zwischenmantelrohr 32 in dem Außenmantelrohr 31 eingefahren, d.h. nach vorn versenkt sind.

Alternativ kann sich die Spindelmutter 61 an dem Innenmantelrohr 33, und die Gewindespindel 62 an dem Außenmantelrohr 31 abstützen.

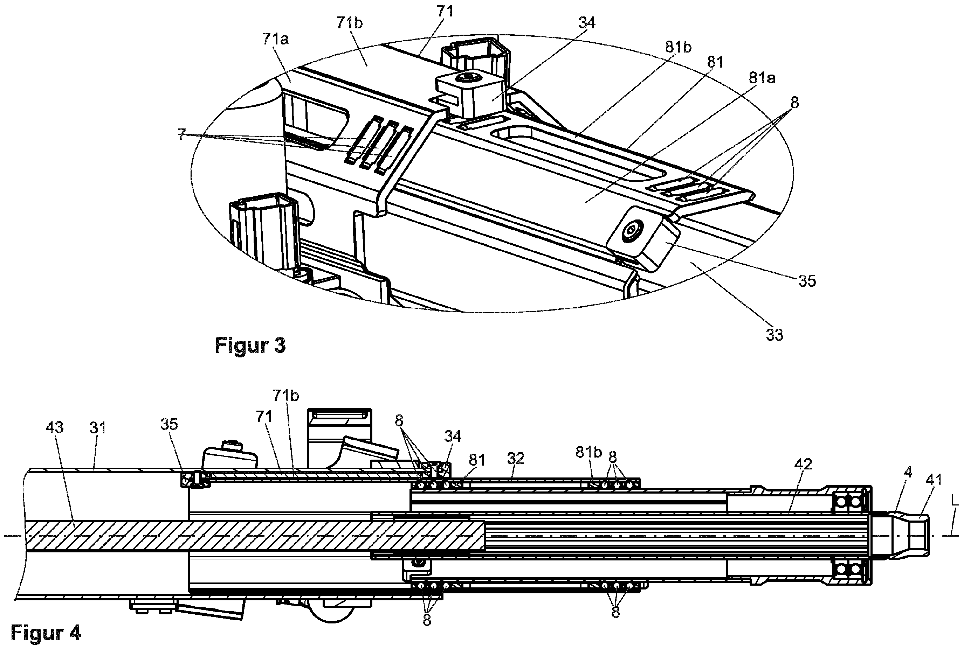

In Figur 2 sind das Außenmantelrohr 31 und das Zwischenmantelrohr 32 aufgeschnitten und somit teilweise weggelassen, so dass erste Rollen 7, die erste Wälzkörper bilden und in einem ersten Rollenkäfig 71 um ihre Rollenachse drehbar aufgenommen sind, und zweite Rollen 8, die zweite Wälzkörper bilden und in einem zweiten Rollenkäfig 81 um ihre Rollenachse lose drehbar aufgenommen sind, sichtbar sind. Die Anordnung der Rollen 7 und 8 sowie der Rollenkäfige 71 und 81 wird in den nachfolgenden Figuren 3 bis 11 im Detail erläutert.

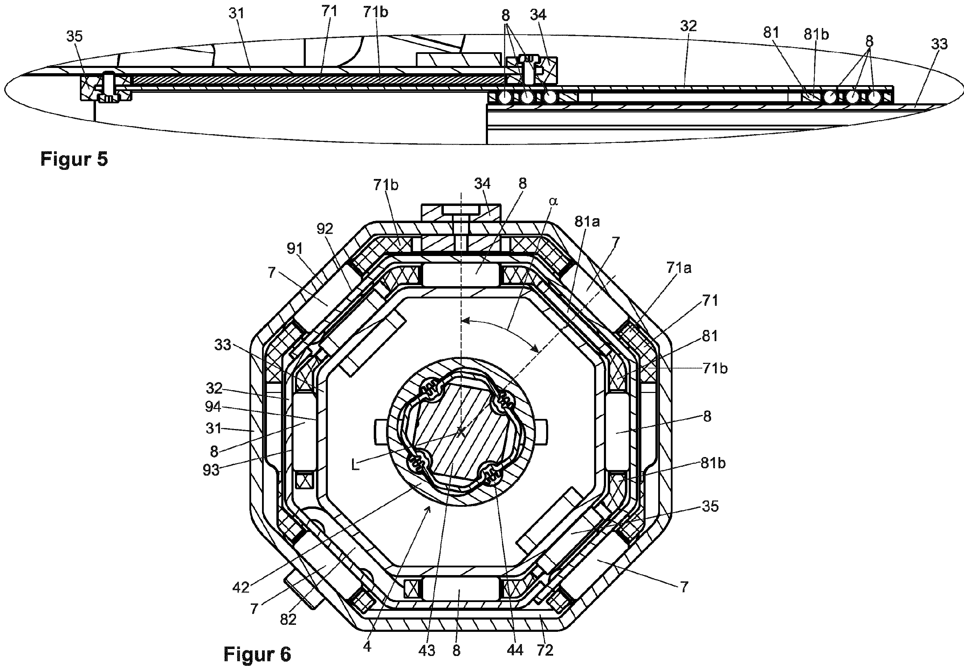

Die Mantelrohre 31, 32 und 33 und die Rollenkäfige 71 und 81 haben einen achteckigen Profilquerschnitt, wie in Figur 6 erkennbar ist, die einen Querschnitt durch die Manteleinheit 3 in eingefahrenen Zustand zeigt, in dem das Innenmantelrohr 33 und das Zwischenmantelrohr 32 in das Außenmantelrohr 31 eingefahren sind. Daraus ist entnehmbar, dass die ersten Rollen 7 zwischen dem Außenmantelrohr 31 und dem Zwischenmantelrohr 32, und die zweiten Rolle 8 zwischen dem Zwischenmantelrohr 32 und dem Innenmantelrohr 33 angeordnet sind. Die Rollen 7 bzw. 8 sind dabei um ihre quer zur Längsachse liegenden Rollenachsen in Achsrichtung der Längsachse L auf Laufbahnen 91, 92, 93, 94 abrollbar, die an den Mantelrohren 31, 32 und 33 ausgebildet sind.

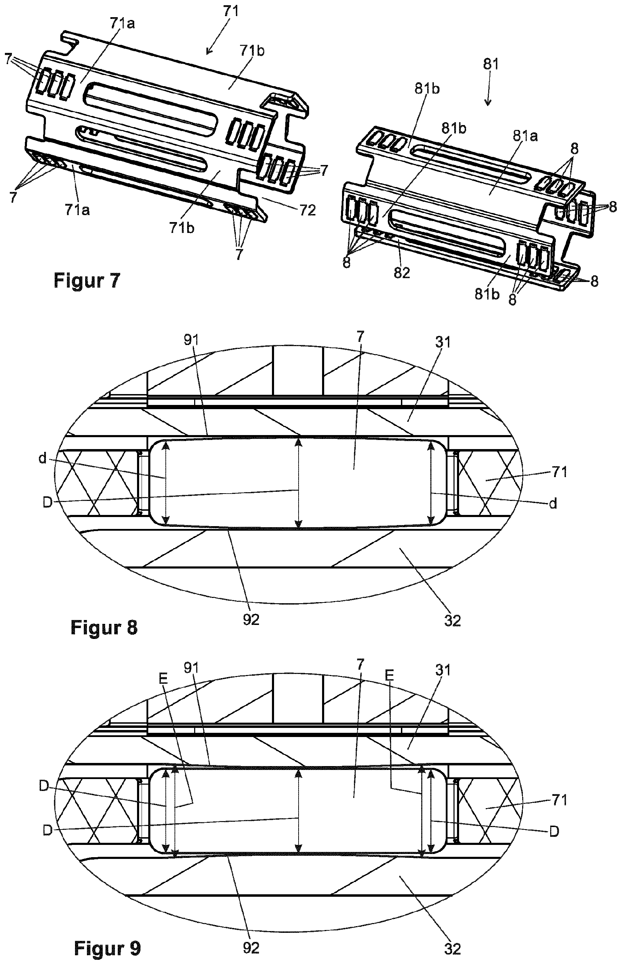

Die Rollenkäfige 71 und 81 sind rohrabschnitt-hülsenförmig ausgebildet, und haben wie die Mantelrohre 31, 32 und 33 einen achteckigen Querschnitt, wie in der freigestellten Ansicht von Figur 7 erkennbar. Der Rollenkäfig 71 ist koaxial zwischen dem Außenmantelrohr 31 und dem Zwischenmantelrohr 32, der Rollenkäfig 81 koaxial zwischen dem Zwischenmantelrohr 32 und dem Innenmantelrohr 33 angeordnet.

Die ersten Rollen 7 sind in dem Rollenkäfig 71 jeweils in Sechser- Reihen auf den Seiten 71a des achteckigen Profils angeordnet, zwischen denen sich in Umfangsrichtung jeweils Seiten 71b ohne Rollen befinden. Die zweiten Rollen 8 sind in dem Rollenkäfig 81 jeweils in Sechser-Reihen auf den Seiten 81b des achteckigen Profils angeordnet, zwischen denen sich in Umfangsrichtung jeweils Seiten 81a ohne Rollen befinden. Die Rollenkäfige 71 und 81 sind so orientiert, dass jeweils die Seiten 71a und 81a, und die Seiten 71b und 81b im Querschnitt parallel benachbart radial übereinander liegen. Dadurch sind die Rollen 7 und 8 relativ zueinander in Umfangsrichtung versetzt angeordnet, und zwar in dem dargestellten achteckigen Querschnitt jeweils um ein Achtel des Umfangs versetzt. Die durch jeweils eine Reihe von Rollen 7 bzw. 8 gebildeten Linearführungen bezüglich der Längsachse L über den Umfang auf Lücke angeordnet, hier in einem Winkelversatz α von 360° / 8 = 45°, wie in Figur 6 erkennbar.

Die Rollenkäfige 71 und 81 weisen jeweils einen in Längsrichtung durchgehenden Schlitz 72 bzw. 82 auf, wie in Figuren 3 und 7 erkennbar ist. Die Schlitze 72 und 82 sind ebenfalls wie die Linearführungen in Umfangsrichtung relativ zueinander versetzt, im gezeigten Beispiel um ein Achtel des Umfangs. Es ist jedoch auch denkbar und möglich, die Rollenkäfige 71 und 81 ohne Schlitz auszubilden und somit mit einem geschlossenen Querschnittsprofil.

Die erfindungsgemäß in Umfangsrichtung versetzte Anordnung der durch die Reihen der Rollen 7 zusammen mit den Laufbahnen 91 und 92 und der Rollen 8 zusammen mit den Laufbahnen 93 und 94 gebildeten Linearführungen ist ebenfalls in der perspektivischen Ansicht von Figur 3 erkennbar.

Aus dem Längsschnitt von Figur 4 und der daraus vergrößerten Ansicht von Figur 5, die eine Schnittansicht gemäß Figur 6 zeigen, geht hervor, dass sich in dem Umfangsbereich, in dem die Rollen 8 zwischen dem Zwischenmantelrohr 32 und dem Innenmantelrohr 33 angeordnet sind, sich zwischen dem Außenmantelrohr 31 und dem Zwischenmantelrohr 32 keine Rollen befinden, sondern lediglich die Wandung der Seite 71b des Rollenkäfigs 7, die keine Rollen trägt. Dadurch wird eine raumsparende Anordnung realisiert, die zudem ein verbessertes Schwingungsverhalten und eine höhere Steifigkeit der Manteleinheit 3 ermöglicht.

In den Figuren 8, 9, 10 und 11 ist jeweils ein vergrößerter Querschnitt durch eine der Linearführungen in unterschiedlichen Ausführungen der Rollen 7 bzw. 8 zwischen den Laufbahnen 91 und 92 bzw. 93 und 94 dargestellt, wobei nur der Übersichtlichkeit halber nur eine erste Rolle 7 und erste Laufbahnen 91 und 92 bezeichnet sind, was jedoch gleichermaßen auf eine Ausführung und Anordnung von zweiten Rollen 8 zwischen zweiten Laufbahnen 93 und 94 übertragbar ist.

In dem Beispiel von Figur 8 sind die Laufbahnen 91 und 92 eben ausgebildet und erstrecken sich in einer achsparallelen Tangentialebene, und die Rolle 7 ist bombiert ausgebildet. Diese bombierte Rolle 7 ist tonnenförmig-konvex, und hat in ihrem mittleren Bereich einen Durchmesser D, der größer ist als der Durchmesser d an den Endbereichen. Dadurch kontaktiert die Rolle 7 die Laufbahnen 91 und 92 in einem kurzen linienförmigen, quasi punktförmigen Kontaktbereich in der Mitte.

In dem Beispiel von Figur 9 ist die Rolle 7 zylindrisch mit durchgehend gleichem Durchmesser D ausgebildet, und die Laufbahnen 91 und 92 sind beide bombiert ausgebildet. Die bombierte Laufbahn 91 ist bogenförmig konvex nach innen ausgewölbt, und die Laufbahn 92 bogenförmig-konvex nach außen, so dass die Laufbahnen 91 und 92 im mittleren Umfangsbereich einen Abstand D haben und nur dort die Rolle 7 kontaktieren, und außen, in den Endbereichen der Rolle 7 einen größeren Abstand E haben, so dass dort die Rolle 7 nicht kontaktiert wird. Dadurch ergibt sich ein mit der Ausführung von Figur 7 vergleichbarer kleinerer Kontaktbereich.

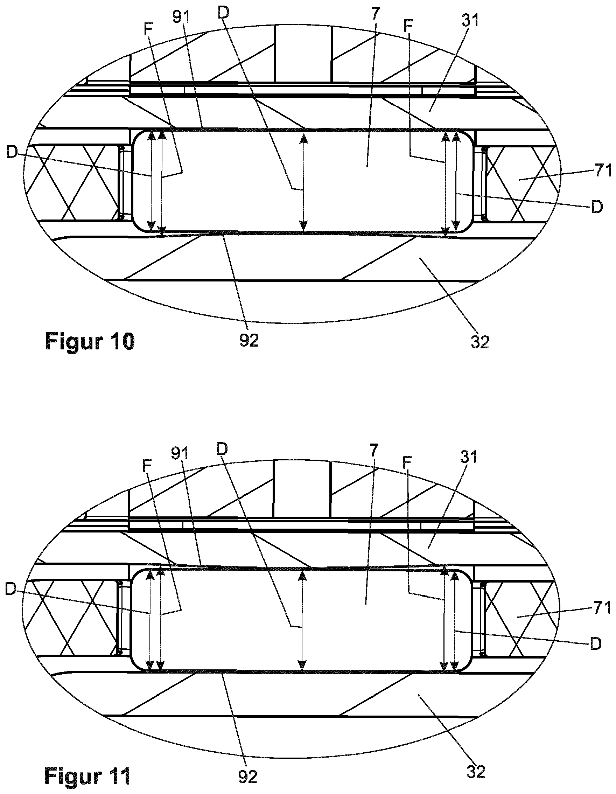

In der in Figur 10 gezeigten Ausführung ist die Rolle 7 wie in Figur 9 zylindrisch mit durchgehend gleichem Durchmesser D ausgebildet. Abweichend zu Figur 9 ist jedoch die äußere Laufbahn 91 eben ausgebildet, und nur die innere Laufbahn 92 ist bombiert. Im mittleren Bereich haben die Laufbahnen den Abstand D, außen einen relativ dazu größeren Abstand F. Dadurch liegt die Rolle 7 an der Laufbahn 91 mit einer linienförmigen Kontaktfläche an, und an der inneren Laufbahn 92 in einer kurzen linienförmigen, quasi punktförmigen Auflage. Die Ausführung gemäß Figur 11 ähnelt der Ausführung gemäß Figur 10 mit dem Unterschied, dass dabei die innere Laufbahn 92 eben ist, und die äußere Laufbahn 91 bombiert wie in der Ausführung gemäß Figur 9.

Es ist darüber hinaus möglich, die bombierte Ausführung der Rolle 7, wie in Figur 8 gezeigt, mit bombierten Laufbahnen 91 und/oder 92 zu kombinieren.

Entsprechend kann die Rolle 8 bombiert oder zylindrisch sein, und/oder die Laufbahnen 93 und/oder 94 bombiert oder zylindrisch.

An dem Außenmantelrohr 31 kann ein Anschlag 34 angebracht sein, der am offenen Ende nach innen in den Zwischenraum zwischen Außenmantelrohr 31 und Zwischenmantelrohr 32 vorsteht. Beim Herausfahren schlägt der Rollenkäfig 71 in Achsrichtung gegen den Anschlag 34 an, und ist gegen eine Trennung vom Außenmantelrohr 31 gesichert. Am inneren Ende des Zwischenmantelrohrs 32 kann ein nach außen in den Zwischenraum zwischen Außenmantelrohr 31 und Zwischenmantelrohr 32 vorstehender Anschlag 35 angebracht sein, der verhindert, dass der Rollenkäfig 71 sich von dem Zwischenmantelrohr 32 in Achsrichtung löst, und ebenfalls das Zwischenmantelrohr 32 gegen Herausziehen aus dem Außenmantelrohr 31 sichert.

Die Lenkspindel 4 ist ebenfalls teleskopierbar ausgebildet, mit einer in eine Außenwelle 42 formschlüssig eingreifenden, in Längsrichtung teleskopierbaren Innenwelle 43, wobei dazwischen Wälzkörper 44 zur Bildung einer leichtgängigen, wälzgelagerten Linearlagerung eingesetzt sein können. Alternativ kann zwischen der Innenwelle 43 und der Außenwelle 42 eine Gleitführung vorgesehen sein.

### Bezugszeichenliste

- 1: Lenksäule
- 2: Stelleinheit
- 3: Manteleinheit
- 31: Außenmantelrohr
- 32: Zwischenmantelrohr
- 33: Innenmantelrohr
- 34, 35: Anschlag
- 4: Lenkspindel
- 41: Anschlussabschnitt
- 42: Außenwelle
- 43: Innenwelle
- 44: Wälzkörper
- 5: Trageinheit
- 51: Befestigungsmittel
- 6: Verstellantrieb
- 61: Spindelmutter
- 62: Gewindespindel
- 63: Motor
- 7,8: Rollen
- 71, 81: Rollenkäfige
- 71a: Seite (mit Rollen)
- 71b: Seite (ohne Rollen)
- 81a: Seite (ohne Rollen)
- 81b: Seite (mit Rollen)
- 72, 82: Schlitz
- 91, 92, 93, 94: Laufbahn

- L: Längsachse
- D, d: Durchmesser (Rolle)
- E, F: Abstand

## Patentansprüche

1. Lenksäule (1) für ein Kraftfahrzeug, umfassend eine Stelleinheit (2), in der eine Lenkspindel (4) um eine Längsachse (L) drehbar gelagert ist und die eine Manteleinheit (3) aufweist, die mindestens drei, axial relativ zueinander teleskopierbar angeordnete Mantelrohre (31, 32, 33) aufweist, von denen eines ein Außenmantelrohr (31) bildet, in dem mindestens ein Zwischenmantelrohr (32) aufgenommen ist, in dem ein Innenmantelrohr (33) aufgenommen ist, und wobei zwischen den Mantelrohren (31, 32, 33) Wälzkörper (7, 8) in Achsrichtung abrollbar angeordnet sind, wobei zwischen dem Außenmantelrohr (31) und dem Zwischenmantelrohr (32) erste Wälzkörper (7), und zwischen dem Zwischenmantelrohr (32) und dem Innenmantelrohr (33) zweite Wälzkörper (8) angeordnet sind,
**dadurch gekennzeichnet,**
**dass** die ersten Wälzkörper (7) relativ zu den zweiten Wälzkörpern (8) in Umfangsrichtung versetzt angeordnet sind.

2. Lenksäule nach Anspruch 1, **dadurch gekennzeichnet, dass** die ersten Wälzkörper (7) in einer oder mehreren achsparallelen ersten Reihen und die zweiten Wälzkörper (8) in einer oder mehreren achsparallelen zweiten Reihen angeordnet sind.

3. Lenksäule nach einem der vorangehenden Ansprüche, **dadurch gekennzeichnet, dass** die ersten Wälzkörper (7) in einem ersten Wälzkörperkäfig (71) und die zweiten Wälzkörper (8) in einem zweiten Wälzkörperkäfig (82) jeweils um ihre Abrollachsen drehbar aufgenommen sind.

4. Lenksäule nach Anspruch 3, **dadurch gekennzeichnet, dass** ein Wälzkörperkäfig (71, 81) zumindest abschnittweise in Richtung der Längsachse (L) geschlitzt ausgebildet ist.

5. Lenksäule nach einem der vorangehenden Ansprüche, **dadurch gekennzeichnet, dass** die Mantelrohre (31, 32, 33) in Richtung der Längsachse (L) erstreckte Laufbahnen (91, 92, 93, 94) für die Wälzkörper (7, 8) aufweisen.

6. Lenksäule nach Anspruch 5, **dadurch gekennzeichnet, dass** zumindest eine der Laufbahnen (91, 92, 93, 94) und/oder die Wälzkörper (7, 8) bombiert ausgebildet sind.

7. Lenksäule nach einem der vorangehenden Ansprüche, **dadurch gekennzeichnet, dass** die Mantelrohre (31, 32, 33) einen mehreckigen Querschnitt haben.

8. Lenksäule nach einem der vorangehenden Ansprüche, **dadurch gekennzeichnet, dass** mindestens zwei ineinander axial teleskopierbare Zwischenmantelrohre (32) vorgesehen sind, zwischen denen dritte Wälzkörper angeordnet sind, die relativ zu den ersten Wälzkörpern (7) und/oder zweiten Wälzkörpern (8) versetzt angeordnet sind.

9. Lenksäule nach einem der vorangehenden Ansprüche, **dadurch gekennzeichnet, dass** ein motorischer Verstellantrieb (6) mit dem Innenmantelrohr (33) und dem Außenmantelrohr (31) verbunden ist, von dem das Innenmantelrohr (33) relativ zum Außenmantelrohr (31) axial ein- und ausfahrbar ist.

10. Lenksäule nach einem der vorangehenden Ansprüche, **dadurch gekennzeichnet, dass** die Lenkspindel (4) mit einem Feedback-Aktuator gekoppelt ist.

11. Lenksäule (1) für ein Kraftfahrzeug, umfassend eine Stelleinheit (2), in der eine Lenkspindel (4) um eine Längsachse (L) drehbar gelagert ist und die eine Manteleinheit (3) aufweist, die mindestens zwei, axial relativ zueinander teleskopierbar angeordnete Mantelrohre (31, 32, 33) aufweist, wobei zwischen den Mantelrohren (31, 32, 33) Wälzkörper (7, 8) in Richtung der Längsachse (L) abrollbar angeordnet sind, wobei die Mantelrohre (31, 32, 33) sich in Richtung der Längsachse (L) erstreckte Laufbahnen (91, 92, 93, 94) für die Wälzkörper (7, 8) aufweisen, **dadurch gekennzeichnet, dass** zumindest eine der Laufbahnen (91, 92, 93, 94) und/oder die Wälzkörper (7, 8) bombiert ausgebildet sind.

## Claims

1. A steering column (1) for a motor vehicle, comprising an actuating unit (2), in which a steering spindle (4) is mounted so as to be able to rotate about a longitudinal axis (L) and which comprises a casing unit (3) which comprises at least three casing tubes (31, 32, 33) which are arranged so as to be axially telescopable relative to one another and one of which forms an outer casing tube (31) in which at least one intermediate casing tube (32), in which an inner casing tube (33) is accommodated, is accommodated, and rolling bodies (7, 8) being arranged, between the casing tubes (31, 32, 33), such that they are able to roll in the axial direction, wherein first rolling bodies (7) are arranged between the outer casing tube (31) and the intermediate casing tube (32), and second rolling bodies (8) are arranged between the intermediate casing tube (32) and the inner casing tube (33),
**characterized**
**in that** the first rolling bodies (7) being arranged offset in the circumferential direction relative to the second rolling bodies (8).

2. The steering column as claimed in claim 1, **characterized in that** the first rolling bodies (7) are arranged in one or more axially parallel first rows and the second rolling bodies (8) are arranged in one or more axially parallel second rows.

3. The steering column as claimed in either of the preceding claims, **characterized in that** the first rolling bodies (7) are accommodated in a first rolling body cage (71) and the second rolling bodies (8) are accommodated in a second rolling body cage (82), in each case such that they are able to rotate about their rolling axes.

4. The steering column as claimed in claim 3, **characterized in that** a rolling body cage (71, 81) is at least partially of slotted configuration in the direction of the longitudinal axis (L).

5. The steering column as claimed in one of the preceding claims, **characterized in that** the casing tubes (31, 32, 33) comprise raceways (91, 92, 93, 94) for the rolling bodies (7, 8), said raceways extending in the direction of the longitudinal axis (L).

6. The steering column as claimed in claim 5, **characterized in that** at least one of the raceways (91, 92, 93, 94) and/or the rolling bodies (7, 8) are/is of cambered configuration.

7. The steering column as claimed in one of the preceding claims, **characterized in that** the casing tubes (31, 32, 33) have a polygonal cross section.

8. The steering column as claimed in one of the preceding claims, **characterized in that** at least two intermediate casing tubes (32) which are axially telescopable in one another are provided, between which tubes third rolling bodies are arranged, which are arranged offset relative to the first rolling bodies (7) and/or second rolling bodies (8).

9. The steering column as claimed in one of the preceding claims, **characterized in that** a motorized adjustment drive (6) is connected to the inner casing tube (33) and the outer casing tube (31), by way of which drive the inner casing tube (33) can be axially retracted and extended relative to the outer casing tube (31).

10. The steering column as claimed in one of the preceding claims, **characterized in that** the steering spindle (4) is coupled to a feedback actuator.

11. A steering column (1) for a motor vehicle, comprising an actuating unit (2), in which a steering spindle (4) is mounted so as to be able to rotate about a longitudinal axis (L) and which comprises a casing unit (3) which comprises at least two casing tubes (31, 32, 33) which are arranged so as to be axially telescopable relative to one another, rolling bodies (7, 8) being arranged, between the casing tubes (31, 32, 33), such that they are able to roll in the direction of the longitudinal axis (L), the casing tubes (31, 32, 33) comprising raceways (91, 92, 93, 94) for the rolling bodies (7, 8), said raceways extending in the direction of the longitudinal axis (L), **characterized in that** at least one of the raceways (91, 92, 93, 94) and/or the rolling bodies (7, 8) are/is of cambered configuration.

## Revendications

1. Colonne de direction (1) pour un véhicule automobile, comportant une unité de réglage (2), dans laquelle un arbre de direction (4) est monté rotatif autour d'un axe longitudinal (L) et qui comprend une unité d'enveloppe (3) qui comprend au moins trois tubes d'enveloppe (31, 32, 33) disposés de manière télescopique axialement les uns par rapport aux autres, parmi lesquels l'un forme un tube d'enveloppe extérieur (31) dans lequel au moins un tube d'enveloppe intermédiaire (32) est logé, dans lequel un tube d'enveloppe intérieur (33) est logé, et des corps de roulement (7, 8) étant disposés entre les tubes d'enveloppe (31, 32, 33) de manière à pouvoir rouler dans la direction axiale, des premiers corps de roulement (7) étant disposés entre le tube d'enveloppe extérieur (31) et le tube d'enveloppe intermédiaire (32), et des deuxièmes corps de roulement (8) étant disposés entre le tube d'enveloppe intermédiaire (32) et le tube d'enveloppe intérieur (33),
**caractérisée en ce que**
les premiers corps de roulement (7) sont disposés de manière décalée par rapport aux deuxièmes corps de roulement (8) dans la direction périphérique.

2. Colonne de direction selon la revendication 1, **caractérisée en ce que** les premiers corps de roulement (7) sont disposés en une ou plusieurs premières rangées axialement parallèles et les deuxièmes corps de roulement (8) sont disposés en une ou plusieurs deuxièmes rangées axialement parallèles.

3. Colonne de direction selon l'une des revendications précédentes, **caractérisée en ce que** les premiers corps de roulement (7) sont logés dans une première cage de corps de roulement (71) et les deuxièmes corps de roulement (8) sont logés dans une deuxième cage de corps de roulement (82) respectivement de manière rotative autour de leurs axes de roulement.

4. Colonne de direction selon la revendication 3, **caractérisée en ce qu'**une cage de corps de roulement (71, 81) est réalisée de manière fendue dans la direction de l'axe longitudinal (L) au moins dans certaines parties.

5. Colonne de direction selon l'une des revendications précédentes, **caractérisée en ce que** les tubes d'enveloppe (31, 32, 33) comprennent des chemins de roulement (91, 92, 93, 94) pour les corps de roulement (7, 8), s'étendant dans la direction de l'axe longitudinal (L).

6. Colonne de direction selon la revendication 5, **caractérisée en ce qu'**au moins l'un des chemins de roulement (91, 92, 93, 94) et/ou les corps de roulement (7, 8) sont réalisés de manière bombée.

7. Colonne de direction selon l'une des revendications précédentes, **caractérisée en ce que** les tubes d'enveloppe (31, 32, 33) présentent une section transversale polygonale.

8. Colonne de direction selon l'une des revendications précédentes, **caractérisée en ce qu'**au moins deux tubes d'enveloppe intermédiaires (32) télescopiques axialement les uns dans les autres sont prévus, entre lesquels des troisièmes corps de roulement sont disposés, lesquels sont disposés de manière décalée par rapport aux premiers corps de roulement (7) et/ou aux deuxièmes corps de roulement (8).

9. Colonne de direction selon l'une des revendications précédentes, **caractérisée en ce qu'**un entraînement de réglage motorisé (6) est relié au tube d'enveloppe intérieur (33) et au tube d'enveloppe extérieur (31), entraînement par lequel le tube d'enveloppe intérieur (33) peut être rentré et sorti axialement par rapport au tube d'enveloppe extérieur (31).

10. Colonne de direction selon l'une des revendications précédentes, **caractérisée en ce que** l'arbre de direction (4) est accouplé à un actionneur à rétroaction.

11. Colonne de direction (1) pour un véhicule automobile, comportant une unité de réglage (2), dans laquelle un arbre de direction (4) est monté rotatif autour d'un axe longitudinal (L) et qui comprend une unité d'enveloppe (3) qui comprend au moins deux tubes d'enveloppe (31, 32, 33) disposés de manière télescopique axialement les uns par rapport aux autres, des corps de roulement (7, 8) étant disposés entre les tubes d'enveloppe (31, 32, 33) de manière à pouvoir rouler dans la direction de l'axe longitudinal (L), les tubes d'enveloppe (31, 32, 33) comprenant des chemins de roulement (91, 92, 93, 94) pour les corps de roulement (7, 8), s'étendant dans la direction de l'axe longitudinal (L), **caractérisée en ce qu'**au moins l'un des chemins de roulement (91, 92, 93, 94) et/ou les corps de roulement (7, 8) sont réalisés de manière bombée.
